## Europäisches Patentamt

## European Patent Office

## Office européen des brevets

(19)

(11) **EP 0 546 375 B1**

(12) # EUROPÄISCHE PATENTSCHRIFT

(45) Veröffentlichungstag und Bekanntmachung des Hinweises auf die Patenterteilung:
**22.05.1996 Patentblatt 1996/21**

(51) Int Cl.⁶: **C08G 18/08**, C08G 18/42, C09D 175/06

(21) Anmeldenummer: **92120002.8**

(22) Anmeldetag: **25.11.1992**

(54) **Wässrige Polyurethandispersionen**

Aqueous polyurethane dispersions

Dispersions de polyuréthanes aqueuses

(84) Benannte Vertragsstaaten:
**BE DE ES FR GB IT NL**

(30) Priorität: **09.12.1991 DE 4140486**

(43) Veröffentlichungstag der Anmeldung:
**16.06.1993 Patentblatt 1993/24**

(73) Patentinhaber: **BASF Aktiengesellschaft**
**D-67063 Ludwigshafen (DE)**

(72) Erfinder:
- **Licht, Ulrike, Dr.**
  **W-6800 Mannheim 25 (DE)**
- **Haeberle, Karl, Dr.**
  **W-6730 Neustadt (DE)**

- **Gulbins, Erich, Dr.**
  **W-6900 Heidelberg (DE)**
- **Rau, Gyopar Maria, Dr.**
  **W-6702 Bad Duerkheim (DE)**
- **Franzmann, Gernot, Dr.**
  **W-6719 Bobenheim (DE)**
- **Portugall, Michael, Dr.**
  **W-6706 Wachenheim (DE)**

(56) Entgegenhaltungen:
DE-A- 3 437 918      FR-A- 2 098 341
US-A- 4 329 490

- -5 067 895BSTRACTS, vol. 83, no. 14, Oktober 1975, Columbus, Ohio, US; abstract no. 115785r, HOSOKAWA ET AL 'WATER-SOLUBLE POLYURETHANES' Seite 63 ;Spalte 2 ; & JP-A-

## Beschreibung

Die Erfindung betrifft wäßrige Dispersionen, enthaltend ein Polyurethan, welches im wesentlichen aufgebaut ist aus

a) organischen Polyisocyanaten,

b) Dihydroxylverbindungen mit einem Molekulargewicht über 500 bis 10 000 g/mol mit mindenstens 2 Carbonsäure- oder Carboxylatgruppen im Molekül, welche durch Umsetzung von Dihydroxylverbindungen mit Tetracarbonsäuredianhydriden im Molverhältnis von 2 : 1 bis 1,05 : 1 erhältlich sind,

c) gegebenenfalls Polyhydroxylverbindungen mit einem Molekulargewicht über 500 bis 5000 g/mol, welche keine Ionengruppen oder in Ionengruppen überführbare Gruppen enthalten,

d) gegebenenfalls Verbindungen mit mindestens einer gegenüber Isocyanat reaktiven Gruppe und mindestens einer anionischen oder in eine anionische Gruppe überführbaren Gruppe mit einem Molekulargewicht von 60 bis 500 g/mol,

e) gegebenenfalls Verbindungen mit mindestens 2 gegenüber Isocyanat reaktiven Gruppen und einem Molekulargewicht von 60 bis 500 g/mol, welche keine Ionengruppen oder in Ionengruppen überführbare Gruppen enthalten.

In Wasser dispergierbare Polyurethane enthalten Verbindungen mit hydrophilen Gruppen, durch welche die Dispergierfähigkeit gewährleistet wird. Als Verbindungen mit hydrophilen Gruppen werden insbesondere auch solche mit Carbonsäuregruppen und mindestens einer gegenüber Isocyanat reaktiven Gruppe, d.h. mindestens einer primären oder sekundären Amino- oder einer Hydroxylgruppe eingesetzt.

Aus der EP-A-18 665 ist bekannt, bei Polyurethanen, welche mit Polyolen auf Basis von Fettsäureestern modifiziert sind, zur Vermeidung von Nebenreaktionen Umsetzungsprodukte aus sterisch gehinderten Diolen mit maximal 18 C-Atomen und Monoanhydriden von Polycarbonsäuren mit mindestens 3 Carboxylgruppen als hydrophile Verbindungen einzusetzen.

In der DE-B-1 237 306 wird die Umsetzung von Polyurethanprepolymeren mit cyclischen Verbindungen, welche nach Ringöffnung zur Salzbildung befähigte Gruppen aufweisen, beschrieben.

Nach der DE-A-2 528 212 können als hydrophile Verbindungen Umsetzungsprodukte von Polyolen und Dicarbonsäureanhydriden verwendet werden.

Die EP-A-171 betrifft ein Verfahren zur Herstellung von Carboxylat - und Amidgruppen aufweisenden Polyurethanen. Dabei werden Tri- oder Tetracarbonsäuremonoanhydride mit Polyolen umgesetzt und die noch vorhandenen Carboxylgruppen zum Teil neutralisiert und zum Teil mit Isocyanatverbindungen unter Amidbildung zur Reaktion gebracht. Dihydroxylverbindungen als Umsetzungsprodukte von Tetracarbonsäuredianhydriden mit Diolen sind aus dieser Schrift nicht bekannt.

Die bisher mit Carbonsäuregruppen enthaltenden Verbindungen hydrophil modifizierten Polyurethane weisen noch eine unbefriedigende Wasserbeständigkeit, insbesondere eine erhebliche Wasserquellbarkeit, auf.

Aufgabe der vorliegenden Erfindung war es, diesem Nachteil abzuhelfen.

Demgemäß wurden die oben definierten wäßrigen Polyurethandispersionen sowie ihre Verwendung zur Herstellung von Überzügen und ihre Verwendung als Klebstoffe gefunden.

Als Polyisocyanate (a) sind insbesondere aliphatische, cycloaliphatische und aromatische Diisocyanate geeignet. Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 7 bis 15 C-Atomen steht.

Geeignete aliphatische, cycloaliphatische und aromatische Diisocyanate sind z. B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluoldiisocyanat.

Es können auch Gemische der Diisocyanate eingesetzt werden. Insbesondere haben sich Gemische von aliphatischen bzw. cycloaliphatischen Diisocyanaten mit aromatischen Diisocyanaten im Molverhältnis von 1: 4 bis 5:1 als geeignet erwiesen.

Neben den Diisocyanaten können in untergeordneten Mengen auch Monoisocyanate zur Molekulargewichtsregulierung eingesetzt werden.

Geeignete Polyhydroxylverbindungen (c) sind insbesondere Dihydroxylverbindungen mit einem Molekulargewicht über 500 bis 5000, z.B. die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Geeignete Dihydroxylverbindungen b) haben ein Molekulargewicht zwischen 500 und 10 000, insbesondere 800 und 8 000, besonders bevorzugt zwischen 800 und 5 000 g/mol. Sie sind erhältlich durch Umsetzung von obengenannten Dihydroxylverbindungen mit Tetracarbonsäuredianhydriden im Molverhältnis von 2:1 bis 1,05, vorzugsweise von 2:1 bis 1,5:1. Bei der Umsetzung entsteht unter Öffnung der Anhydridringe der Tetracarbonsäurediester. Eine Umsetzung der beiden verbleibenden Carbonsäuregruppen mit den Dihydroxylverbindungen zu den Tri- oder Tetraestern findet im wesentlichen nicht statt. Ausgehend von einem Molverhältnis von 2:1 erhält man mit Annäherung an ein Verhältnis von 1,05:1 zunehmend alternierende Einheiten, welche sich von Dihydroxylverbindungen und Tetracarbonsäuredianhydriden ableiten, im Reaktionsprodukt. Da die Dihydroxylverbindungen gegenüber den Tetracarbonsäuredianhydriden im Überschuß eingesetzt werden, leiten sich die endständigen Einheiten jedoch von den Dihydroxylverbindungen ab, so daß insgesamt wieder eine Dihydroxylverbindung entsteht, welche pro Mol eingebauter Tetracarbonsäureanhydrideinheit 2 Carboxylgruppen enthält.

Bei den eingesetzten Tetracarbonsäuredianhydriden kann es sich um aliphatische, cycloaliphatische oder aromatische Verbindungen handeln. Beispielsweise genannt seien:

Pyromellitsäuredianhydrid, Cyclopentantetracarbonsäuredianhydrid, Butantetracarbonsäuredianhydrid, Naphthalintetracarbonsäuredianhydrid, Benzophenontetracarbonsäuredianhydrid oder Diphenylsulfontetracarbonsäuredianhydrid.

Die Umsetzung zwischen der Dihydroxylverbindung und dem Tetracarbonsäuredianhydrid wird vorzugsweise bei Temperaturen zwischen 70 und 150°C, besonders bevorzugt zwischen 90 und 13o°C in der Schmelze oder einem inerten Lösungsmittel durchgeführt. Das Ende der Umsetzung kann dadurch festgestellt werden, daß z.B. im Infrarotspektrum keine Anhydridbande mehr zu erkennen ist. Als Lösungsmittel kommen z. B. Methylethylketon, Methylisobutylketon, N-Methylpyrrolidon oder Toluol in Betracht.

Bei den Verbindungen d) handelt es sich um solche mit mindestens einer gegenüber Isocyanat reaktiven Gruppe, d.h. einer Hydroxyl- oder einer primären oder sekundären Aminogruppe, und einer anionischen oder in eine anionische Gruppe überführbaren Gruppe. Erwähnenswert sind z. B. Aminocarbonsäuren oder Aminosulfonsäuren, z. B. Lysin, β-Alanin, N-(2-Aminoethyl)-2-aminoethansulfonsäure und die in der DE-A-20 34 479 genannten Addukte von aliphatischen diprimären Diaminen an α-olefinische Carbonsäuren, z. B. das Addukt von Ethylendiamin an Acrylsäure.

Vorzugsweise werden Dihydroxycarbonsäuren, insbesondere Dihydroxyalkylcarbonsäuren mit 3 bis 10 C-Atomen eingesetzt. Genannt sei z. B. 2,2-Dimethylolpropionsäure.

Zur Überführung von potentiellen anionischen Gruppen der Komponente b) und d), z. B. Carbonsäuregruppen oder Sulfonsäuregruppen, in Ionengruppen können anorganische und/oder organische Basen wie z.B. Natriumhydroxid, Kaliumhydroxid, Ammoniak oder tertiäre Amine, z. B. Triethylamin oder Dimethylaminopropanol eingesetzt werden.

Zur weiteren Erhöhung der Wasserfestigkeit können auch Erdalkalihydroxide, z. B. $Ca(OH)_2$ oder $Ba(OH)_2$ in Gemisch mit der obengenannten anorganischen oder organischen Basen Mitverwendung finden.

Die Neutralisation der potentiell anionischen Gruppen kann vor oder während der Dispergierung des Polyurethans in Wasser erfolgen.

Als weitere emulgierend wirkende Aufbaukomponenten können z.B. einwertige Polyetheralkohole des Molgewichtsbereiches 500 bis 10 000 g/mol, vorzugsweise von 1 000 bis 5 000 g/mol. Der Zusatz solcher nichtionischer Emulgatoren ist jedoch aufgrund des Gehalts an Aufbaukomponenten b) und gegebenenfalls d) im allgemeinen nicht notwendig.

Aufbaukomponenten (e) sind übliche Kettenverlängerer, also im wesentlichen Verbindungen, welche zwei Hydroxylgruppen, zwei primäre oder sekundäre Aminogruppen oder eine Hydroxyl- und eine primäre oder sekundäre Aminogruppe enthalten. In Betracht kommen z. B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl-3,5,5-trimethyl-cyclohexan (Isophorondiamin), 4,4'-Diaminodicyclohexylmethan, 2,4-Diamino-cyclohexan, 1,2-Diamino-propan, Hydrazin oder Aminoalkohole wie Ethanolamin, Isopropanolamin, Methylethanolamin oder Aminoethoxyethanol. Es können auch Aufbaukomponenten e) mitverwendet werden, die mehr als zwei gegenüber Isocyanat reaktive funktionelle Gruppen enthalten, in diesem Fall wirken die Verbindungen e) auch als Vernetzer.

Die Anteile der Komponenten a) bis e) werden insbesondere so gewählt, daß die Summe der gegenüber Isocyanat reaktiven funktionellen Gruppen, d.h. der Hydroxyl- oder primären oder sekundären Aminogruppen handelt, 0,8 bis 1,2 bevorzugt 0,95 bis 1,05 Grammäquivalente gegenüber 1 Grammäquivalent Isocyanat beträgt.

Besonders bevorzugt entsprechen die gegenüber Isocyanat reaktiven funktionellen Gruppen in ihrer Anzahl den Isocyanatgruppen.

Der Anteil der einzelnen Komponenten, bezogen auf 1 Grammäquivalent Isocyanat beträgt insbesondere

| | |
|---|---|
| 0,01 - 0,8, | bevorzugt 0,05 - 0,7 Grammäquivalente der Komponenten b) |
| 0 0 - 0,8, | bevorzugt 0 -0,4 Grammäquivalent der Komponenten c) |
| 0 - 0,4, | bevorzugt 0 - 0,2 Grammäquivalente der Komponenten d) |
| 0 - 0,9, | bevorzugt 0,05 - 0,8 Grammäquivalente der Komponenten e) |

Ein Gehalt der Komponenten d) im Polyurethan ist nicht notwendig, wenn der Anteil der Komponenten b) bereits ausreichend hoch ist, um eine Dispergierfähigkeit zu gewährleisten.

Zur Herstellung des Polyurethans können die Aufbaukomponenten (a) bis (e) in einem niedrig siedenden, mit Wasser mischbaren organischen Lösungsmittel in bekannter Weise umgesetzt werden, wie es z. B. auch in der DE-A-34 37 918 beschrieben ist.

Als Lösungsmittel sind z. B. Tetrahydrofuran, Methylethylketon, N-Methylpyrrolidon und insbesondere Aceton empfehlenswert.

Die Reaktionstemperatur liegt vorzugsweise bei 50 bis 100°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan wird dann in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in dem niedrig siedenden mit Wasser mischbaren organischen Lösungsmittel zunächst ein Polyurethanprepolymer hergestellt wird. Insbesondere werden dazu zumindest die Aufbaukomponenten (a) und (b) und gegebenenfalls c) sowie gegebenenfalls Anteile der Aufbaukomponenten d) und e) miteinander umgesetzt. Danach wird das erhaltene Polyurethanprepolymer in Wasser dispergiert. Dann kann die weitere Umsetzung insbesondere mit den Aufbaukomponenten oder den verbleibenden Anteilen der Aufbaukomponenten (d) und (e) erfolgen. Anschließend kann, wie bereits oben beschrieben, das organische Lösungsmittel entfernt werden.

Der Feststoffgehalt der erhaltenen wäßrigen Polyurethandispersion liegt vorzugsweise zwischen 20 und 80 Gew.-%, besonders bevorzugt zwischen 30 und 70 Gew.-%.

Die erfindungsgemäßen Dispersionen können zur Herstellung von Beschichtungen, z. B. Lacken oder Schutzanstriches, oder als Klebstoffe, Verwendung finden.

Sie eignen sich insbesondere auch zur Beschichtung von Leder oder synthetischen oder nichtsynthetischen Textilien, z. B. aus Polyamid, Polyester, Wolle oder Baumwolle.

Sie können weitere für die jeweilige Verwendung übliche Bestandteile enthalten.

Für die Verwendung als Klebstoffe kommen als solche insbesondere auch klebrigmachende Harze, z.B. Phenol-Formaldehydharze oder Epoxidharze in Betracht.

Bei der Verwendung zur Herstellung von Beschichtungen sind z. B. Füllstoffe, Farbstoffe, Pigmente, Verlaufsmittel zu nennen.

Die mit den Dispersionen hergestellten Beschichtungen oder Verklebungen zeichnen sich insbesondere durch eine geringe Wasserquellbarkeit aus.

Beispiele

Abkürzungen

IPDA:   Isophorondiamin
IPDI:    Isophorendiisocyanat

DETA:   Diethylentriamin
HDI:    Hexamethylendiisocyanat
TDI:    Toluylendiisocyanat
MDI:    Diphenylmethandiisocyanat
PTHF:   Polytetrahydrofuran
MEK:   Methylethylketon
DMEA:   Dimethylethanolamin
DMPA:   Dimethylolpropionsäure
DETA:   Diethanolamin

Die Teilchengröße der Latexpartikel wurde indirekt über Trübungsmessungen bestimmt. Hierzu wurde die Trübung einer Dispersion mit einem Feststoffgehalt von 0,01 % relativ zu dest. Wasser bei einer Schichtdicke von 2,5 cm und Raumtemperatur bestimmt.

$$LD = \frac{Intensität_{Disp.} \times 100}{Intensität_{Wasser}}$$

Zur Bestimmung der Wasseraufnahme wurden jeweils 50 g der Dispersion bei 40°C 3 Tage zu Filmen getrocknet.

Danach wurden die Filme 24 h bei Raumtemperatur in Wasser gelagert und die Wasseraufnahme durch die Gewichtszunahme bestimmt.

Beispiel 1

In einer Rührapparatur mit Rührer, Thermometer und Rückflußkühler wurden 402 g pTHF (Molgewicht 2000) mit 18,9 g Cyclopentantetracarbonsäuredianhydrid (0,09 mol) und 100 g MEK bei 90°C bis zur Klärung des Gemisches gerührt. Bei RT wurden 55,06 g 1,4-Butandiol und 185,8 g IPDI (0,835 mol) zugegeben und 2 h 15 min bei 90°C erhitzt. Der NCO-Gehalt betrug 1,37 Gew.-%. Es wurde mit 500 g Aceton verdünnt und auf 30°C abgekühlt. Dann wurden 12,9 g Dimethylethanolamin 1200 g Wasser und sofort danach 8,6 g Diethanolamin in 50 g Wasser zugegeben. Das Lösungsmittel wurde bei 85 mbar und 40°C abdestilliert.

Feststoffgehalt 35,6 Gew.-%; LD = 95
Wasseraufnahme: 10,5 Gew.-%

Beispiel 2

386.8 g Polyester aus Adipinsäure/Isophthalsäure 1:1 und Hexandiol mit dem Molekulargewicht 2000 wurden mit 25,2 g Cyclopentantetracarbonsäuredianhydrid (0,12 mol) und 100 g MEK bei 90°C bis zur Klärung gerührt. Dann wurde auf RT abgekühlt und 72,1 g 1,4-Butandiol und bei 35°C 223,6 g Isophorondiisocyanat (1,005 mol) zugegeben. Das Gemisch wurde bei 70°C 3 h 45 min gerührt und mit 600 g Aceton verdünnt. Nach der Zugabe von 17,2 g Dimethylethanolamin wurde kurz gerührt, 1200 g Wasser und danach 8,6 g DETA in 50 g Wasser zugegeben. Das Lösungsmittel wurde bei 129 mbar und 45°C abdestilliert.

Feststoffgehalt: 36,7 Gew.-% LD = 74
Wasseraufnahme: 6,8 Gew.-%

Beispiel 3

397,8 g pTHF (OH-Zahl 56,4, 0,2 mol) und 21,8 g Pyromellitsäuredianhydrid (0,1 mol) wurden bei 120°C 2 h erhitzt. Dann wurde bei dieser Temperatur 54,06 g 1,4-Butandiol zugegeben und nach 30 min auf RT gekühlt. Nach der Zugabe von 120 g MEK, 183,56 g IPDI (0,825 mol) und 0.1 ml Dibutylzinndilaurat wurde noch 3 h 20 min bei 70°C gerührt und mit 600 g Aceton verdünnt. Bei 30°C wurden 12,48 g DMEA, 1400 g Wasser, danach 8,6 g DETA in 50 g Wasser zugegeben.

Das Lösungsmittel wurde bei 80 mbar und 40°C abdestilliert.
Feststoffgehalt: 34,2 Gew.-% LD = 96
Wasseraufnahme: 17,7 Gew.-%

Vergleichsbeispiel 1 (zu Beispiel 1)

401 g p-THF (Mg = 2000 g/mol), 26,8 g Dimethylolpropionsäure (0,2 mol), 54,06 g 1,4-Butandiol und 100 g MEK wurden vorgelegt und 250,3 g IPDI (1,12 mol), sowie 0,1 ml Dibutylzinndilaurat als Katalysator zugegeben. Die Reaktion wurde bei 90°C 6 h 20 min durchgeführt und dann mit 500 g Aceton verdünnt. Der NCO-Wert betrug 0,72 %. Danach wurden bei 30°C 14,26 g Dimethylethanolamin und 1400 g Wasser zugegeben, anschließend 8,6 g Diethanolamin (DETA) in 50 g Wasser.

Das Lösungsmittel wurde bei 84 mbar und 40°C destilliert.
Feststoffgehalt: 36,4 Gew.-% LD = 98
Wasseraufnahme: 17,7 Gew.-%

Vergleichsbeispiel 2 (zu Beispiel 2)

386,8 g Polyester aus Beispiel 2 wurden mit 36,18 g DMPA (0,27 mol), 72,08 g 1,4-Butandiol und 100 g MEK vorgelegt und 310,39 g IPDI (1,395 mol) mit 0,1 ml Dibutylzinndilaurat zugegeben. Die Mischung wurde unter Rühren 3 h 30 min bei 90°C gehalten und dann mit 600 g Aceton verdünnt. Der NCO-Wert betrug 0,69 %. Bei 30°C wurden 19,25 DMEA, 1300 g Wasser und sofort danach 8,6 g DETA in 50 g Wasser zugegeben.

Das Lösungsmittel wurde bei 90 mbar und 40°C abdestilliert.
Feststoffgehalt: 40,6 % LD = 98
Wasseraufnahme 74 Gew.-%

Vergleichsbeispiel 3 (zu Beispiel 3)

397,8 g p-THF (Molgewicht 2000 g/Mol) aus Beispiel 3, 22,78 g DMPA, (0,17 mol) 36,04 g 1,4-Butandiol, 100 g MEK, 199,14 g IPDI (0,895 mol) und 0,1 ml Dibutylzinndilaurat wurden 3 h bei 90°C bis zum NCO-Wert von 1,36 % umgesetzt und mit 740 g Aceton verdünnt. Bei 30°C wurden 12,12 g DMEA, 1690 g Wasser und danach 8,6 g DETA in 50 g Wasser zugegeben.

Das Lösungsmittel wurde bei 88 mbar und 40°C abdestilliert.
Feststoffgehalt: 28,8 Gew.-% LD = 94
Wasseraufnahme: 44,5 Gew.-%

**Patentansprüche**

1. Wäßrige Dispersionen, enthaltend ein Polyurethan, welches im wesentlichen aufgebaut ist aus

   a) organischen Polyisocyanaten,

   b) Dihydroxylverbindungen mit einem Molekulargewicht über 500 bis 10 000 g/mol mit mindestenstens 2 Carbonsäure- oder Carboxylatgruppen im Molekül, welche durch Umsetzung von Dihydroxylverbindungen mit Tetracarbonsäuredianhydriden im Molverhältnis von 2 : 1 bis 1,05 : 1 erhältlich sind,

   c) gegebenenfalls Polyhydroxylverbindungen mit einem Molekulargewicht über 500 bis 5000 g/mol, welche keine Ionengruppen oder in Ionengruppen überführbare Gruppen enthalten,

   d) gegebenenfalls Verbindungen mit mindestens einer gegenüber Isocyanat reaktiven Gruppe und mindestens einer anionischen oder in eine anionische Gruppe überführbaren Gruppe mit einem Molekulargewicht von 60 bis 500 g/mol,

   e) gegebenenfalls Verbindungen mit mindestens 2 gegenüber Isocyanat reaktiven Gruppen und einem Molekulargewicht von 60 bis 500 g/mol, welche keine Ionengruppen oder in Ionengruppen überführbare Gruppen enthalten.

2. Verwendung der Dispersionen gemäß Anspruch 1 zur Herstellung von Überzügen.

3. Verwendung der Dispersionen gemäß Anspruch 1 als Klebstoffe.

4. Mit einer Dispersion gemäß Anspruch 1 beschichteter Gegenstand.

**Claims**

1. An aqueous dispersion containing a polyurethane which consists essentially of

   a) organic polyisocyanates,
   b) dihydroxy compounds having a molecular weight of from more than 500 to 10,000 g/mol and at least 2 carboxyl or carboxylate groups in the molecule and which are obtainable by reacting dihydroxy compounds with tetracarboxylic dianhydrides in a molar ratio of from 2 : 1 to 1.05 : 1,

c) if required, polyhydroxy compounds having a molecular weight of from more than 500 to 5,000 g/mol and containing no ionic groups or groups convertible into ionic groups,

d) if required, compounds having at least one group which is reactive toward isocyanate and at least one anionic group or group convertible into an anionic group and having a molecular weight of from 60 to 500 g/mol and

e) if required, compounds having at least 2 groups which are reactive toward isocyanate and a molecular weight of from 60 to 500 g/mol and containing no ionic groups or groups convertible into ionic groups.

2. Use of a dispersion as claimed in claim 1 for the production of coatings.

3. Use of a dispersion as claimed in claim 1 as an adhesive.

4. An article coated with a dispersion as claimed in claim 1.

**Revendications**

1. Dispersions aqueuses , qui contiennent un polyuréthanne, lui-même constitué essentiellement

a) de polyisocyanates organiques,

b) de composés dihydroxylés d'un poids moléculaire supérieur à 500 et s'élevant jusqu'à 10 000 g/mole avec au moins deux radicaux acide carboxylique ou carboxylate dans la molécule, que l'on peut obtenir par la réaction de composés dihydroxylés avec des dianhydrides d'acides tétracarboxyliques dans le rapport molaire de 2:1 à 1,05:1,

c) éventuellement de composés polyhydroxylés d'un poids moléculaire supérieur à 500 et allant jusqu'à 5000 g/mole, qui ne contiennent ni radicaux ioniques, ni radicaux convertibles en radicaux ioniques,

d) éventuellement des composés avec au moins un radical réactif sur les groupes isocyanate et au moins un radical anionique ou un radical convertible en radical anionique, d'un poids moléculaire de 60 à 500 g/mole,

e) éventuellement des composés avec au moins deux radicaux réactifs sur les groupes isocyanate et d'un poids moléculaire de 60 à 500 g/mole, qui ne contiennent ni radicaux ioniques, ni radicaux convertibles en radicaux ioniques.

2. Utilisation des dispersions suivant la revendication 1 pour la réalisation de revêtements.

3. Utilisation des dispersions suivant la revendication 1, à titre de colles.

4. Objets revêtus d'une dispersion suivant la revendi-cation 1.